# EUROPÄISCHE PATENTSCHRIFT

(11) **EP 0 844 798 B1**
(45) Veröffentlichungstag und Bekanntmachung des Hinweises auf die Patenterteilung: **07.03.2007**
(21) Anmeldenummer: 97120284.1
(22) Anmeldetag: 19.11.1997
(51) Int. Cl.: H04Q 7/38

(54) **Verfahren zur Zuordnung von Mobilstationen zu Zellen von Mobilfunknetzen**
Method for assigning mobile stations to cells of mobile radio networks
Procédé pour attribuer des stations mobiles à des cellules d'un réseau radio mobile

(30) Priorität: 19.11.1996 DE 19647862
(43) Veröffentlichungstag der Anmeldung: 27.05.1998
(73) Patentinhaber: SIEMENS AKTIENGESELLSCHAFT, 80333 München (DE); Italtel S.p.a., 20150 Milano (IT)
(72) Erfinder: Koch, Michael Dipl.-Ing., D-80809 Munchen (DE); Traynard, Jean Michel Dipl.-Ing., D-81667 Munchen (DE); Visconti, Giovanni Dipl.-Ing., I-20069 Vaprio d'Adda (IT)

(56) Entgegenhaltungen:
- EP-A- 0 660 627
- WO-A-96/28947
- US-A- 5 412 375
- US-A- 5 574 971
- US-A- 5 574 973
- US-A- 5 586 338
- US-A- 5 862 480

## Beschreibung

Die Erfindung betrifft ein Verfahren zur Zuordnung von Mobilstationen zu Zellen von Mobilfunknetzen, ein Basisstationssystem mit zumindest zwei unterschiedlichen Funkschnittstellen und eine Mobilstation für ein Mobilfunksystem mit zumindest zwei unterschiedlichen Funkschnittstellen. Letztere Mobilstation ist dabei in der Lage, beide Luftschnittstellen auszuwerten.

Mobil-Kommunikationssysteme ermöglichen den Aufbau von Kommunikationsverbindungen zu mobilen Teilnehmern, indem Informationen über eine Funkschnittstelle übertragen werden. Sind mehrere Teilnehmer auf der gleichen Trägerfrequenz dieser Funkschnittstelle durch unterschiedliche Zeitlagen getrennt, liegt ein Zeitmultiplex-Mobil-Kommunikationssystem vor. Das Zeitmultiplexverfahren wird auch TDMA (Time Division Multiple Access)-Verfahren genannt.

Ein bekanntes Mobil-Kommunikationssystem ist beispielsweise das GSM (Global System for Mobile Communications)-Mobilfunknetz. Zusätzlich zum Zeitmultiplex können auf der Luftschnittstelle auch weitere Verfahren zum Separieren der Teilnehmer angewandt werden. Beim GSM-Mobilfunksystem wird zusätzlich ein Frequenzmultiplex angeboten. Alternativ oder zusätzlich zu den genannten Verfahren zur Teilnehmerseparierung können auch für jede Kommunikationsverbindung spezifische Codes eingesetzt werden.

In einer typischen Einsetzumgebung eines Mobil-Kommunikationssystems, z.B. eines GSM-Mobilfunksystems, unterliegen die übertragenen Informationen auf der Funkschnittstelle unterschiedlichen Störungen. Die von einer Sendestation gesendeten Informationen erreichen eine Empfangsstation über verschiedene Ausbreitungswege, so daß sich bei der Empfangsstation die Signalkomponenten verschiedener Ausbreitungswege überlagern. Zudem können Abschattungen die Übertragung von Informationen von der Sendestation zur Empfangsstation erheblich behindern. Auch Störer besonders im Frequenzband der Funkschnittstelle führen zu einer Beeinträchtigung der Qualität der empfangenen Signale.

Aus diesen Gründen erfolgt eine ständige Überwachung der Luftschnittstelle, um eine Basisstation und eine Frequenz innerhalb des Frequenzbandes der Basisstation auszuwählen, die gute Übertragungsbedingungen garantieren. Zu diesem Zweck findet zwischen einer Mobilstation und einer oder mehreren Basisstationen eine Signalisierung bezüglich der Übertragungsverhältnisse und zur Kennzeichnung der zu wählenden Basisstation und Frequenzen statt. Die Funkbereiche (Zellen) von Basisstationen überlappen sich in der Regel, um eine Übergabe von Kommunikationsverbindungen von einer Basisstation zu einer weiteren zu ermöglichen. Es ist ebenso bekannt, kleinere Zellen (Mikrozellen) innerhalb von größeren Zellen beispielsweise in Ballungszentren, zu planen, um die Kapazität eines Mobilfunknetzes zu erweitern.

Aus der Europäischen Patentschrift EP 0 589 278 A2 ist es weiterhin bekannt, die Geschwindigkeit einer Mobilstation beim Zuteilen einer Basisstation im Laufe einer Übergabeprozedur (Handover) während einer Kommunikationsverbindung zu berücksichtigen und für schnelle Mobilstationen Zellen (Mikrozellen) mit kleineren Radius im Vergleich zu Schirmzellen (Umbrella Cells) oder normalen Zellen nachgeordnet zuzuteilen.

Weiterhin ist es allgemein bekannt, daß mehrere Mobilfunknetze nebeneinander existieren. Diese Netze haben unterschiedliche Funkschnittstellen definiert, die innerhalb von sich überlappenden Funkbereichen parallel verfügbar sind. In Deutschland sind beispielsweise die GSM-Mobilfunknetze (D1 und D2), sowie das DCS-Mobilfunknetz E+ im Betrieb.

Aus der WO 96/28947 ist ein Mobilfunksystem bekannt, in dem ein mobiles Terminal eine Verbindung in einigen Mobilfunknetzen aufbauen und unterhalten kann. Die Mobilfunknetze können zu unterschiedlichen Mobilfunksystemen gehören und somit unterschiedliche Funktechnologien unterstützen. Das mobile Terminal entscheidet über einen Wechsel (Handover) von einem Mobilfunknetz zu einem anderen anhand der Verbindungsqualität und anhand wenigstens eines weiteren Parameters wie Preis, Kapazität, Übertragungsgeschwindigkeit und Verfügbarkeit.

Aus der US 5574973 A ist ein Verfahren zum Registrieren eines Anrufs bekannt, bei dem für ein erstes Funkkommunikationssystem ein Qualitätsfaktor für eine Mehrzahl von Kanälen gemessen wird und einer der Kanäle zum Registrieren des Anrufs ausgewählt wird, falls der entsprechende Qualitätsfaktor einen Qualitätsgrenzwert überschreitet. Falls eine Registrierung im ersten Funkkommunikationssystem nicht möglich ist, werden für ein zweites Funkkommunikationssystem ebenfalls Qualitätsfaktoren für eine Mehrzahl von Kanälen gemessen und ein Kanal, der einen Qualitätsgrenzwert überschreitet zum Registrieren des Anrufs ausgewählt.

Der Erfindung liegt die Aufgabe zugrunde, ein Verfahren zur netzseitigen Zuordnung von Mobilstationen zu Zellen innerhalb von Mobilfunknetzen anzugeben, das Netzbetreibern eine größere Flexibilität bei der Zuteilung von funktechnischen Ressourcen gibt, wenn verschiedene Funkschnittstellen im entsprechenden Funkbereich verfügbar sind.

Diese Aufgabe wird durch das Verfahren nach den Merkmalen des Patentanspruchs 1 und das Basisstationssystem nach den Merkmalen des Patentanspruchs 10 gelöst. Weiterbildungen der Erfindung sind den Unteransprüchen zu entnehmen.

Das erfindungsgemäße Verfahren zur Zuordnung von Mobilstationen zu Zellen von Mobilfunknetzen dient dem Auswählen eines Nutzdatenkanals für eine Mobilstation. Innerhalb von Funkbereichen sind zumindest zwei unterschiedliche Funkschnittstellen verfügbar. Jeder dieser Funkschnittstellen ist eine Priorität zugewiesen, anhand derer ein Nutzdatenkanal zu der Mobilstation ausgewählt wird. Sind für mehrere Funkschnittstellen Mindestbedingungen für einen Verbindungsaufbau gegeben, dann kann erfindungsgemäß eine durch den Betreiber des Mobilfunknetzes definierte Priorisierung der Funkschnittstellen berücksichtigt werden. Dadurch können Eigenarten der einzelnen Funkschnittstellen, z.B. die Zellgröße, die Eignung nur für einen bestimmten Kreis von Mobilstationen, flexibel geplant und ausgenutzt werden.

Gemäß einer Weiterbildung der Erfindung werden bei dem bei der Zuweisung der Priorität zusätzlich in ihrer Ausdehnung unterschiedlichen Zellen berücksichtigt. Eine der Zellen wird anhand der Priorität im Überlappungsbereich mehrerer Zellen für den Aufbau des Nutzdatenkanals ausgewählt. Die unterschiedlichen Funkschnittstellen können damit auch durch unterschiedliche Zellen bereitgestellt werden, wobei die Zellen durch Basisstationen realisiert sind, deren Zellen unterschiedliche Größe haben, die sich im für die Mobilstation zugänglichen Funkbereich überlappen.

Diese Maßnahme gibt einem Mobilfunkbetreiber weitere Freiheitsgrade bei der Netzplanung. Die Prioritätszuteilung kann auch zwischen Betreibern von mehreren Mobilfunknetzen, die jeweils nur eine Funkschnittstelle zur Verfügung stellen, abgestimmt sein, wobei sich für eine Mobilstation dann ein erweitertes Mobilfunknetz mit zumindest zwei Funkschnittstellen ergibt, unter denen eine Auswahl getroffen werden kann.

Vorteilhafterweise handelt es sich bei den Funkschnittstellen um eine GSM-Funkschnittstelle im 900 MHz Frequenzband und um eine DCS-Funkschnittstelle im 1800 MHz Frequenzband. Es könnte jedoch auch weitere Funkschnittstellen (z.B. AMPS, NMT, IS-95 CDMA oder weitere Mobilfunk-Funkschnittstellen) kombiniert werden. Beide erstgenannten Funkschnittstellen sind im Rahmen der GSM-Spezifikation entstanden und haben große Ähnlichkeiten bezüglich der Signalisierung. Dies führt dazu, daß Basisstationen beider Funkschnittstellen an einen gemeinsamen Basisstationscontroller angeschlossen werden können oder gar eine Basisstation mit Sende- und Empfangseinrichtungen für beide Funkschnittstellen ausgerüstet wird. Im Rahmen solcher Mobilfunknetze ermöglicht das erfindungsgemäße Verfahren eine effektivere Auslastung der einzelnen Zellen.

Gemäß einer Weiterbildung der Erfindung bei der Zuweisung der Priorität zusätzlich die Geschwindigkeit der Mobilstation berücksichtigt. Die Eignung von bestimmten Funkschnittstellen für die Zuweisung eines Nutzdatenkanals ist abhängig von der Geschwindigkeit der Mobilstation. So sollten schnellen Mobilstationen keine kleinen Zellen oder Zellen mit einer längeren Signalisierung auf der Funkschnittstelle zugewiesen werden, da die Aufenthaltdauer in einer kleinen Zelle wahrscheinlich nur gering sein wird.

Für eine Mobilstation wird entsprechend einer vorteilhaften Ausgestaltung jeder Funkschnittstelle zumindest zwei Prioritäten zugewiesen. Diese Prioritäten beschreiben das Verhältnis der Geschwindigkeit der Mobilstation zu einem Geschwindigkeitsschwellwert, zur Auslastung der Funkschnittstelle (gleichmäßige Verteilung oder gezieltes Abschalten in verkehrsarmen Zeiten) oder zur gezielten Zuweisung von Funkschnittstellen bzw. Zellen für bestimmte Gruppen von Mobilstationen.

Die Priorität wird bei der Auswahl von Nutzdatenkanälen beim Verbindungsaufbau und/oder bei einer Übergabeprozedur zwischen Zellen oder Funkschnittstellen berücksichtigt. Schon beim Verbindungsaufbau wird so eine intelligente Auswahl getroffen bzw. bei einer Verschlechterung der Übertragungsbedingungen oder bei einer Bewegung der Mobilstation wird fortlaufend die bestgeeigneste Zelle bzw. Funkschnittstelle ausgewählt. Die Eignung berücksichtigt dabei nicht nur die Übertragungsverhältnisse, sondern auch zellplanerische Aspekte.

Die Priorität ist vorteilhafterweise durch ein Operations- und Wartungszentrum dahingehend beeinflußbar, daß für die die funktechnische Versorgung der Mobilstationen bewirkende Basisstationen die Priorität bezüglich der unterschiedlichen Funkschnittstellen, Zellen bzw. Geschwindigkeiten individuell einstellbar ist. Damit sind nicht nur Standardwerte für das gesamte Netz, sondern gezielt abgestimmte Werte für jeden Funkbereich, für den sich gegebenenfalls individuelle Anforderungen ergeben, vorgebbar. Diese Prioritäten sind vorteilhafterweise über der Zeit veränderbar. Somit ergibt sich eine dynamische Zuteilungsstrategie für die funktechnischen Ressourcen in einem Mobilfunknetz.

Gemäß der Erfindung ist eine Basisstation, die zwei unterschiedliche Funkschnittstellen verwaltet, ein Basisstationssystem für ein Mobilfunksystem mit zumindest zwei unterschiedlichen Funkschnittstellen oder ein Mobilfunknetz, das verschiedenartige Funkschnittstellen umfaßt, angegeben, die das erfindungemäße Verfahren umsetzen. Die Prioritäten werden dabei in einem Speichermittel abgelegt.

Gegebenenfalls werden diese Prioritäten zwischen den Netzkomponenten kommuniziert, da nicht jede Basisstation die Informationen zum gesamten Netz, sondern vorzugsweise nur zur eigenen Zelle und zu den Nachbarzellen benötigt. Die Pflege der Prioritäten erfolgt durch ein Wartungsterminal innerhalb des Basisstationssystems bzw. in einem Operations- und Wartungszentrum.

Die Änderbarkeit der Prioritäten schafft eine flexible Anpassung der Ressourcenzuteilung im Mobilfunknetz abhängig von der Verkehrsbelastung in den einzelnen Zellen oder der Diensteanforderung, die aufgrund der Anzahl der mehrere Funkschnittstellen nutzenden Mobilstationen (Dual-Band-Mobilstationen) oder der für einzelne Funkschnittstellen unterschieden Dienste, schwanken können.

Die Auswahl einer Funkschnittstelle erfolgt vorzugsweise durch Komponenten des Mobilfunknetzes. Bei einer solchen Realisierung innerhalb eines GSM-Mobilfunknetzes sind keinerlei Änderungen im Standard nötig. Die Implementierung der Erfindung ist damit besonders einfach.

Alternativ ist es jedoch auch möglich, daß eine Mobilstation, die Informationen über zumindest zwei unterschiedlichen Funkschnittstellen senden und/oder empfangen kann, die Auswahl der Funkschnittstelle bzw. Zelle vornimmt. Speicher- und Steuereinrichtung zur Zuteilung eines Nutzdatenkanals befinden sich damit in der Mobilstation.

Die Erfindung wird im folgenden bezugnehmend auf zeichnerische Darstellungen anhand von Ausführungsbeispielen näher erläutert.

Dabei zeigen
- FIG 1: ein Blockschaltbild eines Mobilfunknetz,
- FIG 2: ein Blockschaltbild eines Basisstationsystem mit Basisstationen für zwei unterschiedliche Funkschnittstellen,
- FIG 3: ein Blockschaltbild eines Mobilfunknetz mit zwei sich überlappenden Basisstationsystemen,
- FIG 4: ein Blockschaltbild eines Basisstationscontrollers,
- FIG 5: ein Blockschaltbild einer Basisstation,
- FIG 6: ein Blockschaltbild einer Mobilstation, und
- FIG 7: eine Prioritätsliste für Zellen.

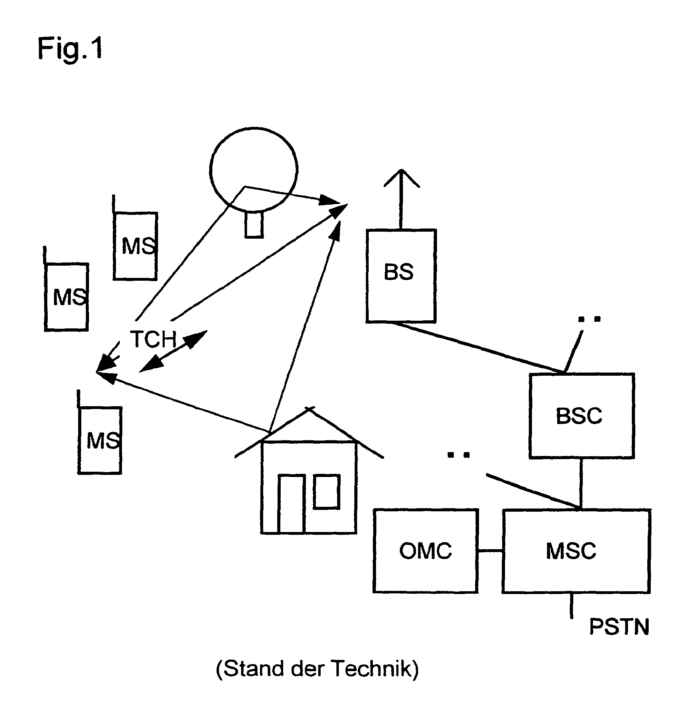

Das Mobilfunknetz nach FIG 1 ist beispielsweise ein Mobilfunknetz nach dem GSM-Standard, siehe dazu auch J. Biala, "Mobilfunk und intelligente Netze" Vieweg Verlag Wiesbaden/Braunschweig, 1995, und besteht aus zumindest einer Mobilvermittlungsstelle MSC, die mit weiteren Mobilvermittlungsstellen MSC vernetzt ist bzw. den Netzübergang zu einem Festnetz PSTN herstellt.

Weiterhin ist die dargestellte Mobilvermittlungsstelle MSC zumindest mit einem Basisstationscontroller BSC verbunden. Nach FIG 1 ist mit dem Basisstationscontroller zumindest eine Basisstation BS verbunden. Zwischen einer Basisstation BS und Mobilstationen MS besteht eine Funkschnittstelle über die Teilnehmersignale von bzw. zu den Mobilstationen MS übertragen werden.

Dem Mobilfunknetz ist weiter ein Operations- und Wartungszentrum OMC zugehörig, das mit einer Mobilvermittlungsstelle MSC verbunden ist und zur Überwachung der Leistungsparameter des Mobilfunknetzes sowie zur Wartung und Fehlerkontrolle vorgesehen ist. Es kann ebenso vorgesehen sein, daß für Teilkomponenten des Mobilfunknetzes beispielsweise ein Basisstationssystem eigenständige Operations- und Wartungszentren bereitgestellt werden.

Ein nicht dargestelltes Funk-Kommunikationssystem zum drahtlosen Netzzugang für Teilnehmer wird beispielsweise derart realisiert, daß abgesetzte Basisstationen direkt mit Vermittlungstellen des Festnetzes verbunden sind und andererseits über eine Funkschnittstelle die Teilnehmer, die in diesem Fall nicht mobil sondern stationär sind, mit dem Festnetz verbinden. Auch hierbei müssen für Kommunikationsverbindungen zu den Teilnehmern Nutzdatenkanäle zugeteilt werden.

In nachstehender Beschreibung werden die Begriffe Zelle und Funkbereich wie folgt verwendet:
Eine Basisstation BTS versorgt eine oder mehrere Zellen, die entweder omnidirektional oder sektorisiert sind und die ein oder zwei Funkschnittstelle anbieten.
Ein Funkbereich ist ein Gebiet, das durch eine oder mehrere Basisstationen BTS versorgt werden kann, sich folglich innerhalb von Zellen befindet. Bei einer Versorgung durch mehrere Basisstationen BTS bezeichnet ein Funkbereich das Überlappungsgebiet von Zellen.

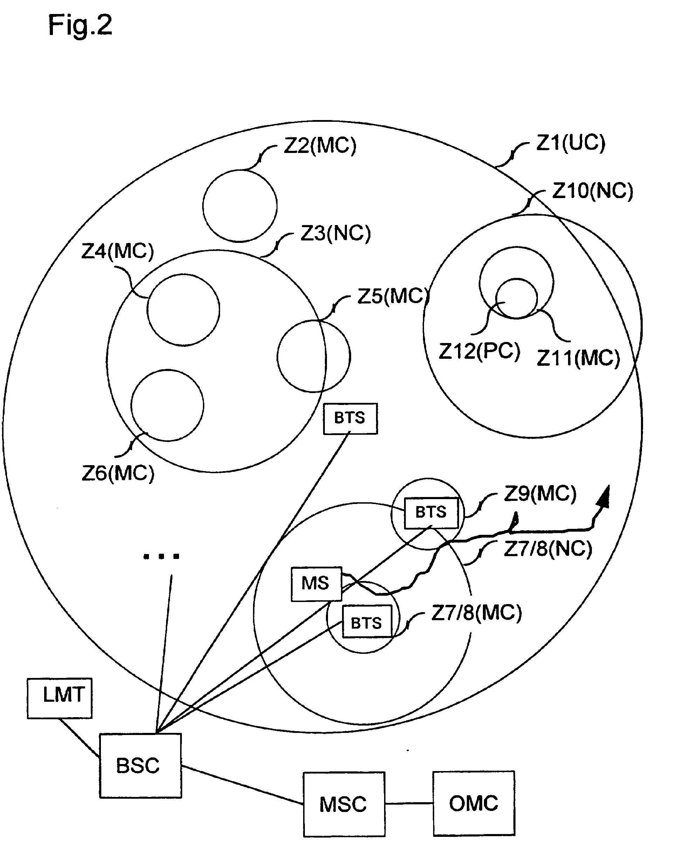

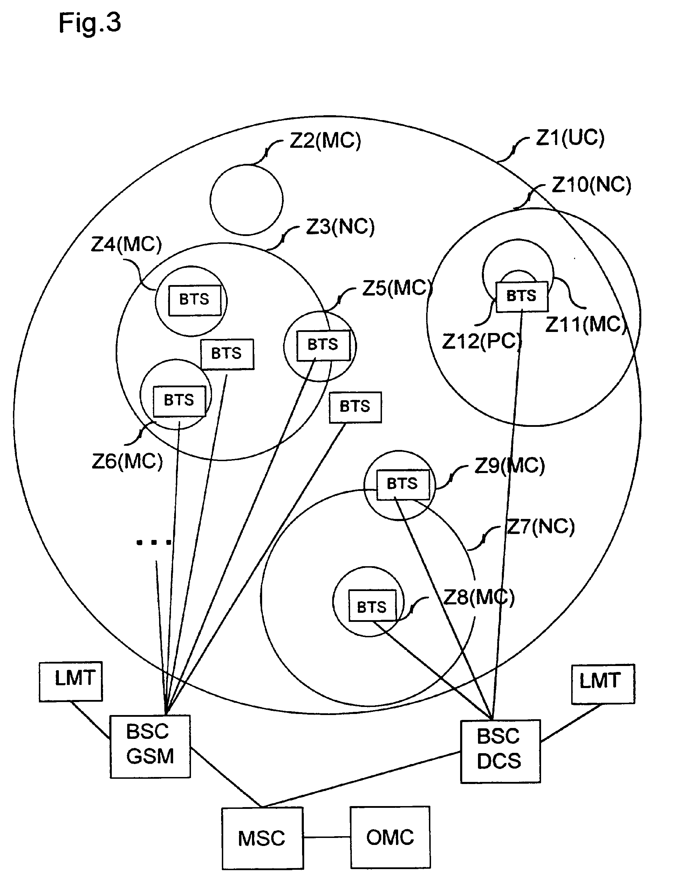

Die Figuren 2 und 3 beschreiben ein geografisches Gebiet, in dem Zellen UC, NC, MN und PC mit zwei unterschiedlichen Funkschnittstellen GSM, DCS innerhalb eines Mobilfunknetzes verfügbar sind. Die verschiedenen Zelltypen werden als Schirmzelle UC (Zelle Z1), als Normalzellen NC (Z3, Z7, Z10) innerhalb der Schmirmzelle UC, als Mikrozellen MC (Z2, Z4 bis Z6, Z8, Z9, Z11) innerhalb der in ihrer Ausdehnung größeren Zellen UC, NC oder als Pikozellen PC (Z12) bezeichnet.

Mobilstationen MS innerhalb der Zellen Z1 bis Z12 werden jeweils durch Basisstationen BTS (in FIG 2 nur für die Zellen Z7/8 und Z9 dargestellt) funktechnisch versorgt. Eine Basisstation BTS kann dabei eine einzige Zelle, z.B. Zelle Z1 oder mehrere Zellen, z.B. Zellen Z7 und Z8 bzw. eine Funkschnittstelle GSM (z.B. in Zelle Z1) oder zwei Funkschnittstellen (nicht dargestellt) versorgen.

Die Funkschnittstellen sind im Ausführungsbeispiel eine GSM-Funkschnittstelle GSM im 900 MHz Frequenzband und eine DCS-Funkschnittstelle DCS im 1800 MHz Frequenzband. Neben dem Frequenzband liegen die Unterschiede beider Funkschnittstellen GSM, DCS in Teilen der Signalisierung für die Schichten 2 und 5, die Systeminformationen enthalten.

Das Basisstationssystem nach FIG 2 zeigt einen Basisstationscontroller BSC, der mit den Basisstationen BTS aller Zellen Z1 bis Z12 verbunden ist. Systemeinträge zu den Zellen Z1 bis Z12 können mit einem lokalem Wartungsterminal LMT oder durch ein Operations- und Wartungszentrum OMC vorgenommen werden.

Das Basisstationssystem nach FIG 3 zeigt zwei Basisstationscontroller BSC, die über eine gemeinsame Mobilvermittlungsstelle MSC verbunden sind. Ein Teil der Zellen Z7 bis Z9 und Z12, deren Basisstatione BTS eine DCS-Funkschnittstelle DCS realisieren werden von einem Basisstationscontroller BSC/DCS gesteuert, während die übrigen Zellen von einem zweiten Basisstationscontroller BSC/GSM gesteuert werden. Alternativ könnten die Basisstationscontroller BSC/DCS und BSC/GSM auch mit unterschiedlichen Mobilvermittlungsstelle MSC verbunden sein.

Eine Mobilstation MS befindet sich in einem Funkbereich mehrerer Zellen Z1, Z7 und Z8 und unterschiedlicher Funkschnittstellen GSM, DCS. Die Funkbereichskonfiguration ändert sich bei einer Bewegung der Mobilstation MS, wobei die jeweilige Konfiguration bei einem Verbindungsaufbau und bei Übergabeprozeduren beachtet wird.

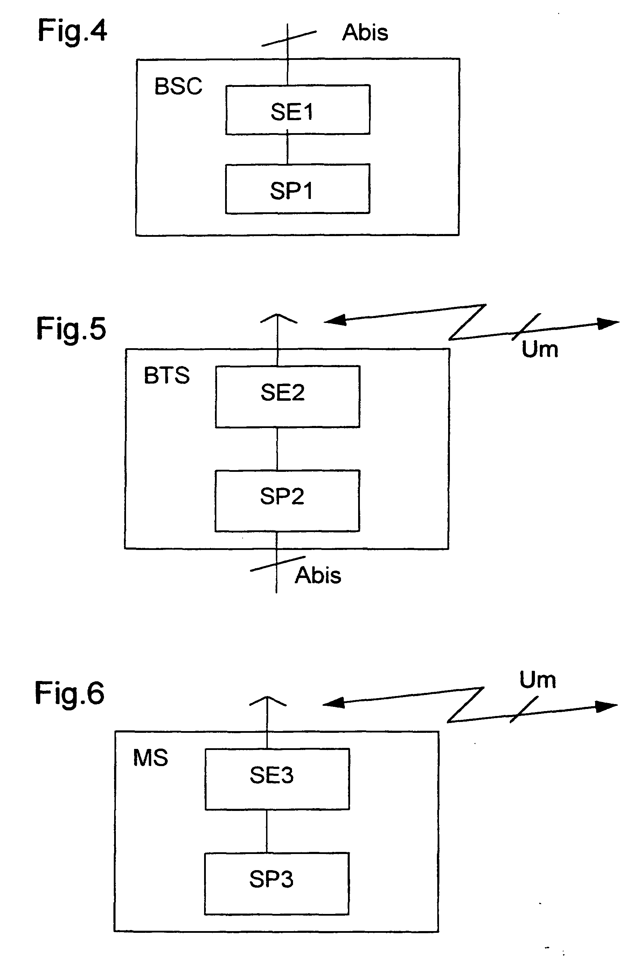

Bevor auf eine Zuteilung von Nutzdatenkanälen TCH beim Verbindungsaufbau und bei einer Übergabeprozedur (Handover) eingegangen wird, soll der Aufbau eines Basisstationscontroller BSC (FIG 4), einer Basisstation BTS (FIG 5) und einer Mobilstation MS (FIG 6) schematisiert erläutert werden. Es wird dabei nur auf die Funktionen zur Verwaltung und Nutzung von Prioritäten P1, P2 bis Pn bezüglich der Zellen Z1 bis Z12 und Funkschnittstellen GSM, DCS eingegangen. Zu weiteren Einzelheiten der Ausgestaltung dieser Einrichtungen wird auf J. Biala, "Mobilfunk und intelligente Netze" Vieweg Verlag Wiesbaden/ Braunschweig, 1995, verwiesen.

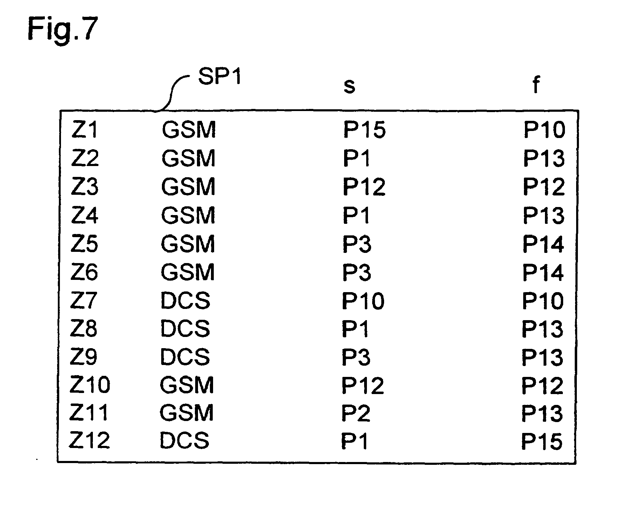

Der Basisstationscontroller BSC nach FIG 4 enthält ein Steuermittel SE1 und eine Mittel zum Speichern SP1. Mit den Basisstationen BTS ist der Basisstationscontroller BSC über eine drahtgebundene oder über eine Satelliten geführte Schnittstelle Abis verbunden. Im Speicher SP1 ist eine Prioritätsliste nach FIG 7 abgelegt, die durch das lokale Wartungsterminal LMT oder das Operations- und Wartungszentrum OMC veränderbar ist.

Das Steuermittel SE1 ist mit der Speicher SP1 verbunden und kann die einzelnen Prioritäten P1, P2 bis Pn auslesen und über die Abis Schnittstelle den Basisstationen BTS mitteilen. Die im Speicher SP1 vorliegende Prioritätsliste wird einer Basisstation BTS nur auszugsweise übermittelt. Es werden die Prioritäten der durch die Basisstation BTS selbst realisierten Zelle (u.B. Zelle Z12) und der Nachbarzellen (z.B. Zellen Z1, Z10 und Z11) mitgeteilt.

Die entsprechende Basisstation BTS nach FIG 5 enthält ein Steuermittel SE2 und einen mit dem Steuermittel SE2 verbunden Speicher SP2. Im Speicher SP2 der Basisstation BTS ist der geschilderte Auszug der Prioritätsliste gespeichert. Das Steuermittel SE2 steuert das Einschreiben der Prioritäten P1, P2 bis Pn und das Zuordnen von Nutzdatenkanälen TCH zur Mobilstation MS basierend auf den konkreten Übertragungsverhältnissen (Empfangspegel, Distanz zu den Basisstationen BTS und Qualität des Empfangs) und den Prioritäten P1, P2 bis Pn.

Über eine im GSM-Standard als Um Schnittstelle bezeichnete Funkschnittstelle GSM, DCS erfolgt eine Signaliserung und eine spätere Nutzdatenübertragung in den Nutzdatenkanälen TCH zur Mobilstation MS. Die Signalisierung zur Mobilstation MS enthält Angaben zu den benachbarten Basisstationen BTS, insbesondere deren Organisationskanal, so dass die Mobilstation auch die Übertragungverhältnisse zu diesen Basisstationen BTS bestimmen kann.

Die Bestimmung der Übertragungsverhältnisse zu mehreren Basisstationen BTS zusammen mit der Einhaltung von Mindestbedingungen für eine Kommunikationsverbindung und der Prioritäten für die einzelnen Zellen Z1 bis Z12 und Funkschnittstellen GSM und DCS bildet die Grundlage für den Verbindungsaufbau und die Übergabe einer Verbindung zu einer bestimmten Basisstation BTS.

Die Entscheidung über die Zuordnung einer Mobilstation zu einer Funkschnittstelle GSM, DCS bzw. der entsprechenden Basisstation BTS kann wie später dargestellt durch die Basisstation BTS erfolgen. Alternativ erfolgt die Entscheidung im Basisstationscontroller BSC, so dass in diesem Fall die Basisstationen BTS keine Prioritätsangaben enthalten müssen. Eine weitere Alternative nimmt Bezug auf FIG 6.

Eine Mobilstation MS nach FIG 6 ist für einen Dual-Band Betrieb ausgerüstet (entsprechende Antennen- und Sende/Empfangseinrichtungen - diese sind breitbandig oder doppelt bereitgestellt -) und enthält eine Steuereinrichtung SE3 und einen Speicher SP3. Im Speicher SP3 sind die Prioritäten P1, P2 bis Pn bezüglich der Basisstationen BTS im Empfangsbereich der Mobilstation MS abgelegt.

Diese Informationen werden zusätzlich zu weiteren Organisationsinformationen von den Basisstationen BTS zur Mobilstation MS fortlaufend übertragen. In diesem Fall nimmt die Mobilstation MS die Entscheidung über die Funkschnittstelle GSM, DCS und die ausgewählt Basisstation BTS vor. Dabei werden auch die Informationen zur Auslastung der Basisstationen BTS und zu den Übertragungsbedingungen berücksichtigt.

In FIG 7 ist eine im Speicher SP1 des Basisstationscontroller BSC nach FIG 2 abgelegt Prioritätsliste gezeigt. Geordnet nach den Zellen Z1 bis Z12 und Funkschnittstellen GSM, DCS sind jeweils zwei Prioritäten P1, P2, P3, P10, P12, P14, P15 zugeordnet. Die erste Spalte der Prioritäten bezieht sich auf langsame oder ruhende s (slow) Mobilstationen MS (z.B. P1 für Zelle Z4) und die zweite Spalte auf sich schnell f (fast) bewegende Mobilstationen MS (z.B. P13 für Zelle Z4).

Das Feststellen der Geschwindigkeit einer Mobilstation erfolgt beispielsweise anhand der Änderung einer ermittelten Vorhaltzeit (timing advance). Weitere Einzelheiten bezüglich der Unterscheidung von schnellen f und langsamen s Mobilstationen MS können der Europäischen Patentschrift EP 0 589 278 A2 entnommen werden. Die Priorität P10 kann für eine Zelle Z7 auch unabhängig von der Geschwindigkeit von Mobilstationen MS sein. Es können auch für eine Zelle Z1 bis Z12 weitere Unterscheidungen, beispielsweise nach der Verkehrsbelastung in den einzelnen Zellen oder bezüglich besonderer zur Verfügung stehender Dienste, vorgenommen werden.

Bezugnehmen auf das Basisstationssystem nach FIG 2, den Basisstationscontroller BSC nach FIG 4 und die Basisstation BTS nach FIG 5 soll die Übergabeprozedur von der Mobilstation MS, die momentan in der Zelle Z7 funktechnisch versorgt wird und eine Kommunikationsverbindung unterhält, erläutert werden. Die Mobilstation ist für einen Dual-Band-Betrieb für beide Funkschnittstellen GSM, DCS ausgerüstet.

Von der Basisstation BTS der Zelle Z7 werden der Mobilstation MS die Frequenzen der Organisationskanäle (BCCH) der benachbarten Zellen Z1, Z8, Z9 übermittelt.Die Mobilstation MS bestimmt die Übertragungsverhältnisse, welche der Basisstation BTS übermittelt werden. Der Basisstation BTS liegen im Speicher SP2 weiterhin die Prioritäten P1 bis Pn der Nachbarzellen Z1, Z8, Z9 vor. Eine Geschwindigkeitsbestimmung für Mobilstation MS ergibt, daß diese sich langsam auf die Zelle Z8 zubewegt. Sind die Mindestbedingungen für diese Zelle Z8 erfüllt, leitet die Basisstation BTS eine Übergabe zur Zelle Z8 ein, da diese eine höhere Priorität hat: P1 > P10.

Die Basisstation BTS der Zelle Z8 enthält in ihrem Speicher SP2 einen erweiterten Datensatz für die Prioritätsliste, da zusätzlich die Zelle Z9 benachbart ist. Angenommen, die Mobilstation MS bewegt sich nun schneller und aus der Zelle Z7 heraus, wird erneut eine Übergabe veranlaßt, und zwar zur Basisstation BTS der Zelle Z1. Die Zelle Z9 wird nicht gewählt, da für schnelle s Mobilstationen MS ihre Priorität P13 geringer ist als die Priorität P10 der Zelle Z1.

Das Operations- und Wartungszentrum OMC nimmt eine Neukonfigurations der Prioritätsliste entsprechend der Verkehrsbedingungen bzw. bei Ausfall oder Wartung von Basisstationen BTS oder beim Hinzugkommen von Basisstationen BTS vor. Teile der kompletten Prioritätslisten mit den Prioritäten P1 bis Pn des Mobilfunknetzes werden den Basisstationscontrollern BSC und davon wiederum Ausschnitte den Basisstationen BTS übermittelt.

## Patentansprüche

1. Verfahren zur Zuordnung von Mobilstationen (MS) zu Zellen (UC, NC, MC, PC) von Mobilfunknetzen, wobei innerhalb von Funkbereichen Zellen mit zwei unterschiedlichen Funkschnittstellen (GSM, DCS) verfügbar sind,
**dadurch gekennzeichnet,**
**dass**
- netzseitig den Zellen jeder Funkschnittstelle (GSM, DCS) jeweils zumindest eine für mehrere Mobilstationen gültige Priorität (P1, P2, ..., Pn) zugewiesen wird, wobei wenigstens zwei Zellen einer Funkschnittstelle unterschiedliche Prioritäten zugewiesen werden,
- netzseitig für einen Nutzdatenkanal (TCH) zu einer Mobilstation (MS) eine Zelle einer Funkschnittstelle (GSM, DCS) anhand von Übertragungsverhältnissen und anhand der Priorität (P1, P2, ..., Pn) ausgewählt wird.

2. Verfahren nach Anspruch 1,
bei dem bei der Zuweisung der Priorität (P1, P2, ..., Pn) zusätzlich in ihrer Ausdehnung unterschiedliche Zellen (UC, NC, MC, PC) berücksichtigt werden.

3. Verfahren nach Anspruch 1 oder 2,
bei dem die Funkschnittstellen (GSM, DCS) als eine GSM-Funkschnittstelle im 900 MHz Frequenzband und als eine DCS-Funkschnittstelle im 1800 MHz Frequenzband ausgeprägt sind.

4. Verfahren nach einem der vorhergehenden Ansprüche,
bei dem bei der Zuweisung der Priorität (P1, P2, ..., Pn) zusätzlich die Geschwindigkeit (s, f) der Mobilstation (MS) berücksichtigt wird.

5. Verfahren nach einem der vorhergehenden Ansprüche,
bei dem die Priorität (P1, P2, ..., Pn) beim Verbindungsaufbau und/oder bei einer Übergabeprozedur zwischen Zellen (UC, NC, MC, PC) oder Funkschnittstellen (GSM, DCS) berücksichtigt wird.

6. Verfahren nach einem der vorhergehenden Ansprüche,
bei dem jeder Funkschnittstelle zumindest zwei Prioritäten (P1, P2, ..., Pn) zugewiesen sind, die mobilstationsbezogen sind.

7. Verfahren nach einem der vorhergehenden Ansprüche,
bei dem die Priorität (P1, P2, ..., Pn) durch ein Operations- und Wartungszentrum (OMC) dahingehend beeinflußbar ist, daß für die die funktechnische Versorgung der Mobilstationen (MS) bewirkenden Basisstationen (BTS) die Priorität (P1, P2, ..., Pn) bezüglich der unterschiedlichen Funkschnittstellen (GSM, DCS), Zellen (UC, NC, MC, PC) und/oder Geschwindigkeiten (s, f) individuell eingestellt wird.

8. Verfahren nach einem der Ansprüche 2 bis 7,
bei dem kleinere gegenüber größeren Zellen (UC, NC, MC, PC) eine höhere Priorität (P1, P2, ..., Pn) haben.

9. Verfahren nach einem der Ansprüche 4 bis 7,
bei dem für Mobilstationen (MS) mit einer Geschwindigkeit über einen einstellbaren Grenzwert größere gegenüber kleineren Zellen (UC, NC, MC) eine höhere Priorität (P1, P2, ..., Pn) haben.

10. Basisstationssystem (BSS) für ein Mobilfunksystem, wobei innerhalb von Funkbereichen Zellen mit zwei unterschiedlichen Funkschnittstellen (GSM, DCS) verfügbar sind,
mit mindestens einer Basisstation (BTS) zur funktechnischen Versorgung von Mobilstationen (MS),
**dadurch gekennzeichnet,**
**dass**
- Mittel zum Speichern (SP1) von den Zellen der Funkschnittstellen (GSM, DCS) jeweils zugewiesenen, für mehrere Mobilstationen gültigen Prioritäten (P1, P2, ..., Pn) für ein Zuweisen von Nutzdatenkanälen (TCH) zu einer Mobilstation (MS) vorhanden sind, wobei wenigstens zwei Zellen einer Funkschnittstelle unterschiedliche Prioritäten zugewiesen werden, und
- ein Steuermittel (SE1)zum Zuordnen einer Mobilstation zu einer Zelle einer Funkschnittstelle (GSM, DCS) anhand von Übertragungsverhältnissen und anhand der Priorität (P1, P2, ..., Pn) ausgebildet ist.

11. Basisstationssystem (BSS) nach Anspruch 10,
bei dem eine Basisstation (BTS) zwei unterschiedliche Funkschnittstellen (GSM, DCS) realisiert.

12. Basisstationssystem (BSS) nach Anspruch 10 oder 11,
bei dem die Priorität (P1, P2, ..., Pn) zusätzlich die Ausdehnung von durch die Basisstationen (BTS) realisierten, unterschiedlichen Zellen (UC, NC, MC, PC) berücksichtigt.

## Claims

1. Method for assignment of mobile stations (MS) to cells (UC, NC, MC, PC) of mobile radio networks, whereby cells with two different radio interfaces (GSM, DCS) are available within a radio area,
**characterized in that**
- on the network side the cells of each radio interface (GSM, DCS) are allocated at least one priority (P1, P2, Pn) valid for a number of mobile stations, with at least two cells of a radio interface being allocated different priorities,
- on the network side for a traffic channel (TCH) to a mobile station (MS) a cell of a radio interface (GSM, DCS) is selected with reference to transmission conditions and with reference to the priority (P1, P2, Pn).

2. Method in accordance with claim 1,
in which different cells (UC, NC, MC, PC) are additionally considered in their extent in the allocation of the priority (P1, P2, Pn).

3. Method in accordance with claim 1 or 2,
in which the radio interfaces (GSM, DCS) are configured as a GSM radio interface in the 900 MHz frequency band and as a DCS radio interface in the 1800 MHz frequency band.

4. Method in accordance with one of the previous claims,
in which the speed (s, f) of the mobile station (MS) is additionally taken into consideration in the allocation of the priority (P1, P2, Pn).

5. Method in accordance with one of the previous claims,
in which the priority (P1, P2, Pn) is taken into consideration on connection setup and/or on a handover procedure between cells (UC, NC, MC, PC) or radio interfaces (GSM, DCS).

6. Method in accordance with one of the previous claims,
in which each radio interface is assigned at least two priorities (P1, P2, Pn) which are related to the mobile station.

7. Method in accordance with one of the previous claims,
in which the priority (P1, P2, Pn) can be influenced by an Operations and Maintenance Center (OMC) to the extent that the priority (P1, P2, ..., Pn) in respect of the different radio interfaces (GSM, DCS), cells (UC, NC, MC, PC) and/or speeds (s, f) is set individually for the base stations (BTS) providing the radio coverage of the mobile stations (MS).

8. Method in accordance with one of the claims 2 to 7,
in which smaller cells have a higher priority (P1, P2, Pn) compared to larger cells (UC, NC, MC, PC).

9. Method in accordance with one of the claims 4 to 7,
in which for mobile stations (MS) with a speed above a selectable limit value, larger cells have a higher priority (P1, P2, ..., Pn) than smaller cells (UC, NC, MC).

10. Base station system (BSS) for a mobile radio system, whereby cells with two different radio interfaces (GSM, DCS) are available within one radio area,
with at least one base station (BTS) for radio coverage of mobile stations (MS),
**characterized in that**
- means are present for storage (SP1) of priorities (P1, P2, Pn) valid for number of mobile stations allocated in each case to the cells of the radio interfaces (GSM, DCS) for an allocation of traffic channels (TCH) to a mobile station (MS), whereby at least two cells of a radio interface are allocated different priorities, and
- a control means (SE1) is embodied for assigning a mobile station to a cell of a radio interface (GSM, DCS) on the basis of transmission conditions and on the basis of the priority (P1, P2, Pn).

11. Base station system (BSS) in accordance with claim 10,
in which a base station (BTS) implements two different radio interfaces (GSM, DCS).

12. Base station system (BSS) in accordance with claim 10 or 11, in which the priority (P1, P2, ...,Pn) additionally takes account of the extent of the different cells (UC, NC, MC, PC) implemented by the base stations (BTS).

## Revendications

1. Procédé pour attribuer des stations mobiles (MS) à des cellules (UC, NC, MC, PC) de réseaux radio mobiles, des cellules avec deux interfaces radio (GSM, DCS) différentes étant disponibles au sein de ces zones radio, **caractérisé en ce que**
- côté réseau, au moins une priorité (P1, P2, ..., Pn) valable pour plusieurs stations mobiles est allouée aux cellules de chaque interface radio (GSM, DCS), des priorités différentes étant allouées à au moins deux cellules d'une interface radio;
- côté réseau, une cellule d'une interface radio (GSM, DCS) est sélectionnée pour un canal de données utiles (TCH) vers une station mobile (MS) à l'aide de conditions de transmission et à l'aide de la priorité (P1, P2, ..., Pn).

2. Procédé selon la revendication 1, dans lequel sont additionnellement prises en compte, lors de l'allocation de la priorité (P1, P2, ..., Pn), des cellules (UC, NC, MC, PC) différentes pour ce qui est de leur étendue.

3. Procédé selon la revendication 1 ou 2, dans lequel les interfaces radio (GSM, DCS) sont matérialisées sous la forme d'une interface radio GSM dans la bande de fréquences de 900 MHz et d'une interface radio DCS dans la bande de fréquences de 1800 MHz.

4. Procédé selon l'une des revendications précédentes, dans lequel est additionnellement prise en compte, lors de l'allocation de la priorité (P1, P2, ..., Pn) la vitesse (s, f) de la station mobile (MS).

5. Procédé selon l'une des revendications précédentes, dans lequel il est tenu compte de la priorité (P1, P2, ..., Pn) lors de l'établissement d'une liaison et/ou lors d'une procédure de transfert entre des cellules (UC, NC, MC, PC) ou des interfaces radio (GSM, DCS).

6. Procédé selon l'une des revendications précédentes, dans lequel sont allouées, à chaque interface radio, au moins deux priorités (P1, P2, ..., Pn) qui sont relatives à une station mobile.

7. Procédé selon l'une des revendications précédentes, dans lequel la priorité (P1, P2, ..., Pn) est influençable par un centre d'exploitation et de maintenance (OMC) en ce sens que, pour les stations de base (BTS) assurant la desserte radio des stations mobiles (MS), la priorité (P1, P2, ..., Pn) concernant les différentes interfaces radio (GSM, DCS), cellules (UC, NC, MC, PC) et/ou vitesses (s, f) est réglable individuellement.

8. Procédé selon l'une des revendications 2 à 7, dans lequel des cellules (UC, NC, MC, PC) de taille moindre ont une priorité (P1, P2, ..., Pn) supérieure par rapport à des cellules de plus grande taille.

9. Procédé selon l'une des revendications 4 à 7, dans lequel, pour des stations mobiles (MS) ayant une vitesse supérieure à une valeur limite réglable, des cellules (UC, NC, MC) de plus grande taille ont une priorité (P1, P2, ..., Pn) supérieure par rapport à des cellules de taille moindre.

10. Système de stations de base (BSS) pour un système radio mobile, des cellules avec deux interfaces radio différentes (GSM, DCS) étant disponibles au sein de zones radio, avec au moins une station de base (BTS) pour la desserte radio de stations mobiles (MS), **caractérisé en ce que**
- sont présents des moyens de stockage (SP1) de priorités (P1, P2, ..., Pn) valables pour plusieurs stations mobiles et allouées respectivement aux cellules des interfaces radio (GSM, DCS), pour une allocation de canaux de données utiles (TCH) à une station mobile (MS), des priorités différentes étant allouées à au moins deux cellules d'une interface radio, et
- est réalisé un moyen de commande (SE1) pour attribuer une station mobile à une cellule d'une interface radio (GSM, DCS) à l'aide de conditions de transmission et à l'aide de la priorité (P1, P2, ..., Pn).

11. Système de stations de base (BSS) selon la revendication 10, dans lequel une station de base (BTS) réalise deux interfaces radio (GSM, DCS) différentes.

12. Système de stations de base (BSS) selon la revendication 10 ou 11, dans lequel la priorité (P1, P2, ..., Pn) tient additionnellement compte de l'étendue de cellules (UC, NC, MC, PC) différentes réalisées par les stations de base (BTS).
